# FASCICULE DE BREVET EUROPEEN

(11) **EP 0 710 449 B1**
(45) Date de publication et mention de la délivrance du brevet: **23.05.2001**
(21) Numéro de dépôt: 94117413.8
(22) Date de dépôt: 04.11.1994
(51) Int. Cl.: A23L 1/23, A23L 1/227

(54) **Agent aromatisant**
Gewürzmittel
Flavouring agent

(43) Date de publication de la demande: 08.05.1996
(73) Titulaire: SOCIETE DES PRODUITS NESTLE S.A., 1800 Vevey (CH)
(72) Inventeur: Zurbriggen, Beat Denis, CH-8180 Buelach (CH); Bengtsson, Bengt, CH-8472 Seuzach (CH)
(74) Mandataire: Wavre, Claude-Alain

(56) Documents cités:
- EP-A- 0 320 717
- FR-A- 2 065 833
- US-A- 4 371 551

## Description

La présente invention a pour objet un procédé de préparation d'un agent aromatisant ainsi qu'une utilisation de cet agent.

L'utilisation de graines germées dans l'alimentation humaine, notamment l'utilisation de céréales germées telles que l'orge dans la fabrication de la bière, est connue depuis l'antiquité.

Mais on connaît aussi des utilisations plus récentes des enzymes produites dans la pousse naissante à l'occasion de la germination de la graine.

EP 0320717 (ENIRICERCHE S.p.A), par exemple, décrit un procédé de préparation d'hydrolysats enzymatiques de protéines dépourvus d'amertume mettant en oeuvre des enzymes extraites de graines germées de sorgho.

La présente invention a pour but de proposer un procédé de préparation d'un agent aromatisant qui tire un parti plus direct et plus complet de la richesse aromatique potentielle de graines d'un végétal comestible, ainsi qu'une utilisation précise de l'agent ainsi préparé.

A cet effet, dans le procédé de préparation d'un agent aromatisant selon la présente invention, on fait germer des graines d'un végétal comestible, on fait mûrir les pousses obtenues sous l'effet de leurs enzymes endogènes, on inactive les enzymes et l'on recueille tout ou partie des pousses mûries.

De même, dans le cadre de la présente invention, on utilise ledit agent aromatisant comme matière première pour la préparation de produits de la réaction de Maillard, seule ou en mélange avec d'autres matières riches en précurseurs et/ou en renforçateurs d'arômes.

Pour mettre en oeuvre le présent procédé, on peut partir de graines d'un végétal contenant des protéines riches en cystéine ou méthionine, et/ou contenant des hémicelluloses riches en sucres réducteurs tels que le xylose, l'arabinose ou le glucose, et/ou riche en acide galacturonique, par exemple. De préférence, on part de graines d'un végétal choisi dans le groupe formé par les légumineuses, les céréales, les oléagineuses et les crucifères. On peut recommander tout particulièrement l'usage de graines de luzerne, radis, fenugrec, lentilles, pois et haricots, par exemple.

Pour faire germer lesdites graines, on peut les faire tremper au préalable durant 0-30 h à 15-30°C, dans une eau pure ou additionnée de 0-5% de chlorure de sodium comme agent stabilisateur, par exemple.

On peut disposer les graines éventuellement trempées au préalable dans une enceinte adéquate renfermant une atmosphère à hygroscopie et température réglables et comportant des moyens d'aspersion d'eau sur les graines en germination, par exemple.

On peut faire germer lesdites graines durant 1-10 d à 15-30°C tout en les arrosant par intermittence avec une eau pure ou additionnée de 0-5% de chlorure de sodium comme agent stabilisateur, par exemple.

De préférence, on fait germer lesdites graines sous atmosphère contrôlée jusqu'à ce que les pousses présentent une teneur en matière sèche comprise entre 20 et 50%.

On peut faire mûrir les pousses, sous l'effet de leurs enzymes endogènes, à une température comprise entre plus de 30°C et 70°C, de préférence à 45-65°C, durant 12-72 h, par exemple. On peut faire mûrir les pousses entières, dans une atmosphère à forte humidité relative ou avec un peu d'eau, et les réduire ensuite en purée, notamment par homogénéisation, par exemple. On peut également les faire mûrir sous forme de purée, après les avoir homogénéisées, par exemple.

On peut alors inactiver les enzymes à 80-95°C durant 2-30 min, par exemple.

On peut ensuite déshydrater les pousses, notamment par séchage sous pression réduite, ou préparer un extrait soluble desdites pousses mûries et sécher cet extrait, notamment par atomisation, par exemple.

Dans une première variante du présent procédé, on mélange une matière végétale riche en protéines, notamment du gluten de blé, auxdites pousses avant de les faire mûrir.

Dans une deuxième variante du présent procédé, on ajoute également des enzymes exogènes aux pousses lors de leur maturation, notamment pour diminuer la viscosité de ladite purée.

Dans une troisième variante du présent procédé, on prévoit en outre une fermentation des graines, durant leur germination, et/ou des pousses entières et/ou des pousses sous forme subdivisée, notamment sous forme de purée, avec au moins un microorganisme intéressant quant à son pouvoir aromatisant ou acidifiant et/ou son habilité à dégrader les sucres réducteurs et à améliorer ainsi la conservabilité du présent produit, notamment avec au moins un microorganisme choisi dans un groupe formé par *Lactobacillus plantarum*, *Lactobacillus sake*, *Bacillus natto*, *Saccharomyces cerevisiae*, *Lactobacillus carnis*, *Staphylococcus xylosus*, *Debaryomyces hansenii*, *Pediococcus pentosaceus*, *Penicillium nalgiovensis* et leurs mélanges, par exemple.

L'agent aromatisant préparé par le procédé selon la présente invention peut être utilisé tel quel, sous forme déshydratée ou non, pour aromatiser des mets, des sauces ou des potages, par exemple.

Dans le cadre de la présente invention, il est donc aussi prévu d'utiliser cet agent aromatisant comme matière première pour la préparation de produits de la réaction de Maillard, seule ou en mélange avec d'autres matières riches en précurseurs et/ou en renforçateurs d'arômes, telles qu'une sauce de soya ou un autolysat de levure, voire avec certains sucres réducteurs ou certaines substances riches en soufre à l'état sulfure, telles que la cystine, la cystéine, la méthionine ou la thiamine, par exemple.

Pour réaliser une telle réaction, on peut préparer un mélange présentant une teneur en eau de 35-55% et comprenant, en % en poids de matière sèche, 24-98% du présent agent aromatisant, 2-40% de chlorure de sodium, 0-4% de sucre réducteur ajouté, 0-2% d'une substance contenant du soufre, 0-15% de glutamate monosodique et 0-15% de saccharose, par exemple.

On peut faire réagir le mélange par chauffage à 80-150°C, de préférence 120-150°C, durant 1 min à 4 h, de préférence durant 1 à 40 min, les durées relativement courtes correspondant aux températures relativement élevées et inversément.

On peut sécher ensuite le produit de réaction jusqu'à une teneur en eau résiduelle inférieure ou égale à 2%.

On peut réaliser la réaction et le séchage dans deux appareils distincts, notamment dans un autoclave ou dans un cuiseur à bande et dans un séchoir sous vide, puis casser et broyer dans un moulin à marteaux la masse compacte obtenue, par exemple. On peut aussi réaliser la réaction et le séchage par cuisson extrusion dans une extrudeuse à double vis, et découper ou broyer délicatement le boudin expansé obtenu, par exemple.

Les exemples ci-après illustrent diverses formes de réalisation du procédé de préparation de l'agent aromatisant, des variantes du procédé et de l'utilisation de l'agent aromatisant selon la présente invention.

Dans ces exemples, l'azote total (Ntot) a été déterminé par la méthode Kjeldahl. La teneur en protéines est définie et calculée comme le produit Ntot x 6,25. L'azote alpha-aminé (Nalpha) a été déterminé par la méthode Slyke. Le degré d'hydrolyse est déterminé comme le quotient Nalpha/Ntot. La teneur en acide glutamique (Glu) est déterminée enzymatiquement. La teneur en matière sèche (DM) est déterminée après séchage de 4 h à 70°C sous 20 mbar. Les pourcentages sont donnés en poids, sur poids total (%) ou sur poids de matière sèche (% DM).

### Exemple 1

On trempe 1 kg de radis daikon (*Raphanus sativus)* dans 41 d'eau pendant 16 h à 25°C. On les égoutte et on les dispose dans une enceinte renfermant une atmosphère à hygroscopie et températures réglables et comportant des moyens d'aspersion d'eau sur les graines en germination.

Dans cette enceinte, on laisse les graines germer durant 8 d à 20°C tout en les arrosant ou aspergeant d'eau toutes les deux heures.

On découpe les pousses ainsi obtenues en petits morceaux et on les fait mûrir à 40°C durant 48 h sous l'effet de leurs enzymes endogènes. On inactive les enzymes en chauffant la masse de morceaux de pousses mûries à 90°C durant 12 min. On sèche la masse à 60°C sous une pression réduite de 20 mbar durant 8h et on la réduit en poudre.

On obtient un agent aromatisant en poudre que l'on peut utiliser tel quel, autrement dit dont on peut saupoudrer divers mets pour rehausser leur saveur.

### Exemple 2

On trempe des graines de luzerne (*Medicago saliva*) dans de l'eau durant 15 h à 25°C. On les fait germer dans une enceinte adéquate semblable à celle décrite à l'exemple 1 durant 2, 4 et 6 d à 25°C, tout en les arrosant avec de l'eau toutes les 12 h. On homogénéise les pousses, on les fait mûrir à 55°C durant 24 ou 48 h, on les chauffe à 90°C durant 3 min pour inactiver les enzymes, et on les sèche à 65°C sous pression réduite durant 6-7h.

On détermine la teneur en matière sèche, azote total, azote alpha-aminé et acide glutamique, et l'on forme les quotients azote alpha-aminé/azote total et acide glutamique/protéine de l'agent aromatisant ainsi obtenu.

Les résultats obtenus sont rassemblés dans le tableau 1 ci-après où l'on a aussi indiqué, pour comparaison, les valeurs obtenues pour les pousses non mûries ni séchées:

**Tableau 1**

| **germination (d)** | **maturation (h)** | **DM (%)** | **Ntot (% DM)** | **Nalpha (% DM)** | **Glu (% DM)** | **Nalpha/Ntot (%)** | **Glu/protéine (%)** |
|---|---|---|---|---|---|---|---|
| 2 | 0 | 20.2 | 6.43 | 0.99 | 0.09 | 15.39 | 0.22 |
| 2 | 24 | 98.5 | 5.98 | 1.00 | 0.31 | 16.72 | 0.83 |
| 2 | 48 | 98.1 | 6.22 | 1.19 | 0.33 | 19.13 | 0.85 |
| 4 | 0 | 8.8 | 6.59 | 1.59 | 0.08 | 24.13 | 0.19 |
| 4 | 24 | 97.8 | 6.33 | 1.90 | 0.36 | 30.02 | 0.91 |
| 4 | 48 | 97.1 | 6.59 | 2.04 | 0.50 | 30.96 | 1.21 |
| 6 | 0 | 7.6 | 5.92 | 1.57 | 0.12 | 26.52 | 0.32 |
| 6 | 24 | 98.1 | 6.93 | 2.14 | 0.43 | 30.88 | 0.99 |
| 6 | 48 | 98.3 | 6.91 | 2.23 | 0.60 | 32.27 | 1.39 |

On voit sur ce tableau que pour les durées de germination de 2, 4 et 6 d et pour les durées de maturation de 24 et 48 h, la teneur en acide glutamique, important renforçateur d'arôme, augmente de manière remarquable par rapport aux teneurs déterminées, pour comparaison, pour un temps de maturation zéro. On fait une constatation analogue pour la teneur en azote alpha-aminé. On note des valeurs tout particulièrement intéressantes des quotients azote alpha-aminé/azote total et acide glutamique/protéine à partir d'une durée de germination de 4 d et une durée de maturation de 24 h.

### Exemple 3

On procède de la manière décrite à l'exemple 2 avec des graines de radis daikon, fenugrec (*Trigonella phoenum-graceum*), lentilles jaunes (*Lens esculenta*), pois verts (*Pisum sativum)* et haricots mung (*Phaseolus radiatus*), pour une durée de germination de 4 d et pour une durée de maturation de 24 h.

On détermine la teneur en matière sèche, azote total, azote alpha-aminé et acide glutamique, et l'on forme les quotients azote alpha-aminé/azote total et acide glutamique/protéine de l'agent aromatisant ainsi obtenu.

Les résultats obtenus sont rassemblés dans le tableau 2 ci-après où l'on a aussi indiqué, pour comparaison, les valeurs obtenues pour les pousses non mûries ni séchées:

**Tableau 2**

| **graine** | **germination (d)** | **maturation (h)** | **DM (%)** | **Ntot** **(% DM)** | **Nalpha** **(% DM)** | **Glu** **(% DM)** | **Nalpha/Ntot (%)** | **Glu/protéine (%)** |
|---|---|---|---|---|---|---|---|---|
| radis daikon | 4 | 0 | 13.4 | 5.07 | 0.53 | 0.16 | 10.45 | 0.50 |
| | | 24 | 98.1 | 4.79 | 0.83 | 0.54 | 17.32 | 1.80 |
| fenugrec | 4 | 0 | 8.0 | 5.00 | 0.63 | 0.20 | 12.60 | 0.64 |
| | | 24 | 97.4 | 5.44 | 1.62 | 0.47 | 29.78 | 1.38 |
| lentilles | 4 | 0 | 15.8 | 6.20 | 0.95 | 0.22 | 15.32 | 0.57 |
| | | 24 | 96.9 | 4.95 | 1.45 | 0.66 | 29.29 | 2.13 |
| pois | 4 | 0 | 22.5 | 4.62 | 0.57 | 0.25 | 12.34 | 0.86 |
| | | 24 | 96.6 | 4.76 | 0.95 | 0.67 | 19.96 | 2.25 |
| haricots mung | 4 | 0 | 13.0 | 5.15 | 1.07 | 0.12 | 20.78 | 0.37 |
| | | 24 | 97.9 | 4.59 | 1.07 | 0.46 | 23.31 | 1.60 |

On voit sur ce tableau 2 que pour chacune de ces graines, pour une durée de germination de 4 d et pour une durée de maturation de 24 h, la teneur en acide glutamique augmente de manière remarquable par rapport à la teneur déterminée, pour comparaison, pour un temps de maturation zéro. On fait une constatation analogue pour la teneur en azote alpha-aminé.

### Exemple 4

On procède de la manière décrite à l'exemple 3 pour les haricots mung. Après la maturation de 24 h et l'inactivation des enzymes, on homogénéise une partie de pousses avec une partie d'eau. On centrifuge le mélange homogénéisé, et l'on recueille une solution claire que l'on concentre et que l'on sèche par atomisation.

L'agent aromatisant ainsi obtenu présente une saveur relativement neutre et se prête particulièrement bien à une utilisation comme matière première pour la préparation de produits de la réaction de Maillard.

### Exemple 5

On procède de la manière décrite à l'exemple 2 pour la luzerne jusqu'à l'obtention des pousses après 4 d de germination. Avant la maturation, on homogénéise une partie de pousses avec une partie égale en poids de matière sèche de gluten de blé. On procède alors à une maturation du mélange durant 48 h à 40°C, on le chauffe durant 3 min à 90°C pour inactiver les enzymes et on le sèche par atomisation.

L'agent aromatisant ainsi obtenu comprend un mélange de peptides et d'acides aminés provenant des pousses de luzerne et du gluten de blé. Il se prête particulièrement bien à une utilisation comme matière première pour la préparation de produits de la réaction de Maillard.

### Exemple 6

On procède de la manière décrite à l'exemple 3 pour les radis daikon jusqu'à l'obtention des pousses après 4 d de germination. On découpe les pousses en petits morceaux et on leur ajoute 2% de chlorure de sodium. On les inocule avec une culture de *Lactobacillus plantarum* du commerce, on les laisse fermenter et mûrir durant 48 h à 32°C, et on les chauffe durant 10 min à 90°C pour inactiver les bactéries et les enzymes.

L'agent aromatisant ainsi obtenu présente une saveur particulièrement relevée.

### Exemple 7

On trempe des graines de lentilles dans de l'eau durant 12 h à 20°C. On les fait germer dans une enceinte adéquate durant 4 d à 23°C, tout en les arrosant avec de l'eau toutes les 6 h. On homogénéise les pousses et on les inocule avec une culture de *Bacillus natto* du commerce. On les fait fermenter durant 24 h à 37°C. On élève la température à 55°C, on les laisse mûrir 24 h à cette température, on les chauffe à 90°C durant 10 min pour inactiver les bactéries et les enzymes, et on les sèche à 60°C sous une pression réduite de 20 mbar durant 8 h.

On détermine la teneur en matière sèche, azote total, azote alpha-aminé, acide glutamique et sucres réducteurs (RS), et l'on forme le quotient azote alpha-aminé/azote total de l'agent aromatisant ainsi obtenu.

Les résultats obtenus sont rassemblés dans le tableau 3 ci-après où l'on a repris, pour faciliter la comparaison, les valeurs correspondantes obtenues à l'exemple 3 pour les lentilles:

**Tableau 3**

| **germination (d)** | **DM (%)** | **Ntot (% DM)** | **Nalpha (% DM)** | **Nalpha/Ntot (%)** | **Glu (% DM)** | **RS (%DM)** |
|---|---|---|---|---|---|---|
| 4 | 97.9 | 4.3 | 1.27 | 29.53 | 0.97 | 1.06 |
| 4 (Ex 3) | 96.9 | 4.95 | 1.45 | 29.29 | 0.66 | 4.79 |

Ainsi, si l'on compare les résultats obtenus au présent exemple avec ceux obtenus à l'exemple 3 pour les lentilles, on voit qu'il sont très semblables, à l'exception de la teneur en acide glutamique et surtout de la teneur en sucres réducteurs. Cette dernière est nettement plus faible dans l'agent aromatisant obtenu au présent exemple, ce qui lui assure une meilleure conservabilité.

### Exemple 8

On trempe des graines de lentilles dans de l'eau durant 12 h à 20°C. On les fait germer dans une enceinte sous atmosphère contrôlée à 100% d'humidité et dans l'obscurité durant 6 d à 30°C. On homogénéise une partie A des pousses avant de les laisser mûrir durant 24 h à 55°C. On laisse mûrir une partie B des poussses durant 24 h à 55°C et on les homogénéise ensuite. On chauffe ensuite les pousses A et B à 90°C durant 3 min pour inactiver les enzymes et on les sèche à 60°C sous une pression réduite de 20 mbar durant 8 h.

On détermine la teneur en matière sèche, azote total, azote alpha-aminé et acide glutamique, et l'on forme le quotient azote alpha-aminé/azote total des agents aromatisants ainsi obtenus.

Les résultats obtenus sont rassemblés dans le tableau 4 ci-après où l'on a aussi indiqué, pour comparaison, les valeurs obtenues pour un temps de maturation égal à zéro.

**Tableau 4**

| **maturation (h)** | **DM (%)** | **Ntot (% DM)** | **Nalpha (% DM)** | **Nalpha/Ntot (%)** | **Glu (% DM)** |
|---|---|---|---|---|---|
| 0 | 38.1 | 3.99 | 0.21 | 5.26 | 0.05 |
| 24 (A) | 97.5 | 4.10 | 0.76 | 18.53 | 0.18 |
| 24 (B) | 99.1 | 4.30 | 0.50 | 11.63 | 0.14 |

On voit sur ce tableau 4 que la teneur en matière sèche des pousses obtenues par germination en atmosphère contrôlée et dans l'obscurité atteint des valeurs remarquablement élevées. On voit également que le degré d'hydrolyse des pousses homogénéisées avant maturation est notablement supérieur au degré d'hydrolyse des pousses homogénéisées après maturation.

### Exemple 9

On prépare des graines de lentilles germées, fermentées avec une culture de *Bacillus natto*, mûries et inactivées de la manière décrite à l'exemple 7.

On mélange cet agent aromatisant avec de l'eau, du xylose, du chlorure de sodium, de la cystéine, du glutamate monosodique et du saccharose en proportions telles que le mélange obtenu présente une teneur en eau de 49% et comprenne, en % en poids de matière séche, 40% de matière sèche dudit agent aromatisant y-compris 0,44% de sucres réducteurs, 1,5% de xylose, 34% de chlorure de sodium, 1,5% de cystéine, 11,5% de glutamate monosodique et 11,5% de saccharose.

On fait réagir le mélange par chauffage en cuve à double manteau à 100°C durant 3 h. On le sèche sous une pression réduite de 15 mbar à 95°C jusqu'à une teneur en matière sèche de 1,5%. On le casse et on le réduit en poudre.

Pour déguster ce produit de la réaction de Maillard, on en dissout 5 g additionnés de 5 g de chlorure de sodium dans 1 l d'eau bouillante. L'eau ainsi aromatisée présente un goût agréable, dépourvu de toute amertume, rappelant celui d'un bouillon de viande, et elle ne présente pas l'odeur caractéristique et pénétrante de natto traditionnel.

### Exemple 10

On mélange de l'agent aromatisant en poudre obtenu à l'exemple 4 avec de l'eau, du xylose, du chlorure de sodium, de la cystéine, du glutamate monosodique et du saccharose en proportions telles que le mélange obtenu présente une teneur en eau de 40% et comprenne, en % en poids de matière séche, 40% de matière sèche dudit agent aromatisant y-compris 2,4% de sucres réducteurs, 1,5% de xylose, 34% de chlorure de sodium, 1,5% de cystéine, 11,5% de glutamate monosodique et 11,5% de saccharose.

On fait réagir le mélange par chauffage en cuve à double manteau à 120°C durant 40 min. On le sèche, on le casse et on le réduit en poudre.

On obtient un produit de la réaction de Maillard qui, dégusté dans les mêmes conditions que celui de l'exemple 9, présente un goût agréable, dépourvu de toute amertume, rappelant celui d'un bouillon de viande.

### Exemple 11

On mélange de l'agent aromatisant en poudre obtenu à l'exemple 5 avec de l'eau, du xylose, du chlorure de sodium, de la cystéine, du glutamate monosodique et du saccharose, en proportions telles que le mélange obtenu présente une teneur en eau de 43% et comprenne, en % en poids de matière séche, 40% de matière sèche dudit agent aromatisant y-compris 1,8% de sucres réducteurs, 1,5% de xylose, 34% de chlorure de sodium, 1,5% de cystéine, 11,5% de glutamate monosodique et 11,5% de saccharose.

On fait réagir le mélange par chauffage en cuve à double manteau à 120°C durant 40 min. On le sèche, on le casse et on le réduit en poudre.

On obtient un produit de la réaction de Maillard qui, dégusté dans les mêmes conditions que celui de l'exemple 9, présente un goût agréable, dépourvu de toute amertume, rappelant celui d'un bouillon de viande.

## Revendications

1. Procédé de préparation d'un agent aromatisant, dans lequel on fait germer des graines d'un végétal comestible, on fait mûrir les pousses obtenues sous l'effet de leurs enzymes endogènes, on inactive lesdites enzymes et l'on recueille tout ou partie des pousses mûries.

2. Procédé selon la revendication 1, dans lequel on fait germer des graines d'un végétal choisi dans le groupe formé par les légumineuses, les céréales, les oléagineuses et les crucifères.

3. Procédé selon la revendication 1, dans lequel on fait germer lesdites graines durant 1-10 d à 15-30°C tout en les arrosant par intermittence et l'on fait mûrir lesdites pousses durant 12-72 h à une température comprise entre plus de 30°C et 70°C, de préférence à 45-65°C.

4. Procédé selon la revendication 1, dans lequel on inactive lesdites enzymes durant 2-30 min à 80-95°C.

5. Procédé selon la revendication 1, dans lequel on fait germer lesdites graines sous atmosphère contrôlée jusqu'à ce que les pousses présentent une teneur en matière sèche comprise entre 20 et 50%.

6. Procédé selon la revendication 1, dans lequel on déshydrate les pousses mûries par séchage sous pression réduite.

7. Procédé selon la revendication 1, dans lequel on prépare un extrait soluble des pousses mûries et l'on sèche cet extrait par atomisation.

8. Procédé selon la revendication 1, dans lequel on mélange une matière végétale riche en protéines, notamment du gluten de blé, aux pousses avant de les faire mûrir.

9. Procédé selon la revendication 1, dans lequel on ajoute également des enzymes exogènes aux pousses lors de leur maturation.

10. Procédé selon la revendication 1, dans lequel on prévoit en outre une fermentation des graines, durant leur germination, et/ou des pousses entières et/ou des pousses sous forme subdivisée, avec au moins un microorganisme présentant un pouvoir aromatisant ou acidifiant et/ou une habilité à dégrader les sucres réducteurs.

11. Procédé selon la revendication 10, dans lequel ledit microorganisme est choisi dans le groupe formé par *Lactobacillus plantarum, Lactobacillus saké, Bacillus natto, Saccharomyces cerevisiae, Lactobacillus carnis, Staphylococcus xylosus, Debaryomyces hansenii*, *pediococcus pentosaceus*, *Pénicillium nalgiovensis* et leurs mélanges.

12. Agent aromatisant obtenu par le procédé selon l'une des revendications 1-11.

13. Utilisation de l'agent aromatisant selon l'une des revendications 1-11, comme matière première pour la préparation de produits de la réaction de Maillard, seule ou en mélange avec d'autres matières riches en précurseurs et/ou en renforçateurs d'arômes.

14. Utilisation selon la revendication 13, dans laquelle on prépare un mélange présentant une teneur en eau de 35-55% et comprenant, en % en poids de matière sèche, 24-98% dudit agent aromatisant, 2-40% de chlorure de sodium, 0-4% de sucre réducteur ajouté, 0-2% d'une substance contenant du soufre, 0-15% de glutamate monosodique et 0-15% de saccharose.

15. Utilisation selon la revendication 14, dans laquelle on fait réagir ledit mélange par chauffage à 80-150°C, de préférence 120-150°C, durant 1 min à 4 h, de préférence durant 1 à 40 min.

## Claims

1. Method for preparing a flavouring agent, wherein the seeds of an edible plant are germinated, the shoots obtained are ripened under the effect of their endogenous enzymes, the said enzymes are inactivated and all or part of the ripened shoots are gathered.

2. Method according to claim 1, wherein the seeds are germinated of a plant chosen from the group formed of leguminosae, cereals, oleaginous plants and cruciferae.

3. Method according to claim 1, wherein the said seeds are germinated for 1-10 days at 15-30°C while watering them intermittently and the said shoots are ripened for 12-72 hours at a temperature of between above 30°C and 70°C, preferably 45-65°C.

4. Method according to claim 1, wherein the said enzymes are inactivated for 2-30 min. at 80-95°C.

5. Method according to claim 1, wherein the said seeds are germinated in a controlled atmosphere until the shoots have a dry matter content of between 20 and 50%.

6. Method according to claim 1, wherein the ripened shoots are dehydrated by drying under reduced pressure.

7. Method according to claim 1, wherein a soluble extract of the ripened shoots is prepared and this extract is dried by atomization.

8. Method according to claim 1, wherein a plant material rich in proteins, in particular wheat gluten, is mixed with the shoots before they are ripened.

9. Method according to claim 1, wherein exogenous enzymes are also added to the shoots as they mature.

10. Method according to claim 1, wherein the seeds during their germination and/or the whole shoots and/or shoots in a subdivided form are fermented with at least one microorganism having a flavouring or acidifying power and/or an ability to degrade reducing sugars.

11. Method according to claim 10, wherein the said microorganism is chosen from the group consisting of *Lactobacillus plantarum, Lactobacillus sake, Bacillus natto, Saccharomyces cerevisiae, Lactobacillus carnis, Staphylococcus xylosus, Debaryomyces hansenii, Pediococcus pentosaceus, Penicillium nalgiovensis* and mixtures thereof.

12. Flavouring agent obtained by the method according to one of claims 1-11.

13. Use of the flavouring agent according to one of claims 1-11, as a raw material for preparing Maillard reaction products, alone or mixed with other materials rich in flavour precursors and/or enhancers.

14. Use according to claim 13, wherein a mixture is prepared having a water content of 35-55 % and comprising, in % by weight of dry matter, 24-98 % of the said flavouring agent, 2-40 % sodium chloride, 0-4 % of added reducing sugar, 0-2 % of a sulfur-containing substance, 0-15 % of monosodium glutamate and 0-15 % of sucrose.

15. Use according to claim 14, wherein the said mixture is made to react by heating at 80-150°C, preferably 120-150°C, for 1 min. to 4 h, preferably for 1-40 min.

## Patentansprüche

1. Verfahren zur Herstellung eines Aromamittels, bei dem man Samen einer Speisepflanze keimen lässt, die erhaltenen Sprösslinge durch die Wirkung ihrer endogenen Enzyme reifen lässt, die Enzyme inaktiviert und die reifen Sprösslinge ganz oder teilweise sammelt.

2. Verfahren nach Anspruch 1, bei dem man Samen einer Pflanze keimen lässt, die aus der von Hülsenfrüchten, Getreide, Ölpflanzen und Kreuzblütlern gebildeten Gruppe ausgewählt ist.

3. Verfahren nach Anspruch 1, bei dem man die Samen 1-10 Tage bei 15-30°C keimen lässt, indem man sie intermittierend gießt, und die Sprösslinge 12-72 h bei einer Temperatur zwischen mehr als 30°C und 70°C, vorzugsweise 45-65°C, reifen lässt.

4. Verfahren nach Anspruch 1, bei dem man die Enzyme 2-30 min bei 80-95°C inaktiviert.

5. Verfahren nach Anspruch 1, bei dem man die Samen unter Schutzgasatmosphäre keimen lässt, bis die Sprösslinge einen Trockenmassegehalt zwischen 20 und 50 % aufweisen.

6. Verfahren nach Anspruch 1, bei dem man die reifen Sprösslinge durch Trocknung unter vermindertem Druck dehydratisiert.

7. Verfahren nach Anspruch 1, bei dem man einen löslichen Extrakt der reifen Sprösslinge herstellt und diesen Extrakt durch Sprühtrocknung trocknet.

8. Verfahren nach Anspruch 1, bei dem man ein pflanzliches Material mit hohem Proteingehalt, insbesondere Weizengluten, den Sprösslingen vor dem Reifen beimischt.

9. Verfahren nach Anspruch 1, bei dem man den Sprösslingen bei ihrer Reifung auch exogene Enzyme beigibt.

10. Verfahren nach Anspruch 1, bei dem man außerdem eine Fermentierung der Samen während ihrer Keimung und/oder der ganzen Sprösslinge und/oder der Sprösslinge in zerkleinerter Form mit mindestens einem Mikroorganismus vorsieht, der ein Aromatisierungs- oder Ansäuerungsvermögen und/oder die Fähigkeit, reduzierende Zucker zu spalten, besitzt.

11. Verfahren nach Anspruch 10, bei dem der Mikroorganismus aus der Gruppe ausgewählt ist, die gebildet ist aus *Lactobacillus plantarum, Lactobacillus* sake, *Bacillus natto, Saccharomyces cerevisiae, Lactobacillus* carnis, *Staphylococcus xylosus, Debaryomyces hansenii, Pediococcus pentosaceus, Penicillium nalgiovensis* und ihren Mischungen.

12. Aromamittel, das in dem Verfahren nach einem der Ansprüche 1 bis 11 hergestellt wurde.

13. Verwendung des Aromamittels nach einem der Ansprüche 1 bis 11 als Rohstoff für die Herstellung von Produkten der Maillard-Reaktion allein oder in Mischung mit anderen Stoffen mit einem hohen Gehalt an Aromavorläufern und/oder -verstärkern.

14. Verwendung nach Anspruch 13, bei der man eine Mischung mit einem Wassergehalt von 35-55% herstellt, die, in % vom Gewicht der Trockenmasse, aus 24-98% Aromamittel, 2-40% Natriumchlorid, 0-4% zugesetzten reduzierenden Zuckern, 0-2% schwefelhaltiger Substanz, 0-15% Mononatriumglutamat und 0-15% Saccharose besteht.

15. Verwendung nach Anspruch 14, bei der man die Mischung durch Erhitzen auf 80-150°C, vorzugsweise 120-150°C, für 1 min bis 4 h, vorzugsweise für 1 bis 40 min, reagieren lässt.
